# EUROPÄISCHE PATENTSCHRIFT

(11) **EP 2 381 217 B1**
(45) Veröffentlichungstag und Bekanntmachung des Hinweises auf die Patenterteilung: **14.09.2016**
(21) Anmeldenummer: 11162540.6
(22) Anmeldetag: 15.04.2011
(51) Int. Cl.: G01B 21/08, G01B 7/06

(54) **Messsonde zur zerstörungsfreien Messung der Dicke dünner Schichten**
Measuring probe for non-destructive measurement of the thickness of thin coatings
Sonde de mesure pour la mesure non destructive de l'épaisseur de couches minces

(30) Priorität: 23.04.2010 DE 202010006061 U
(43) Veröffentlichungstag der Anmeldung: 26.10.2011
(73) Patentinhaber: Helmut Fischer GmbH Institut für Elektronik und Messtechnik., 71069 Sindelfingen (DE)
(72) Erfinder: Fischer, Helmut, 6315 Oberägeri (CH)
(74) Vertreter: Maser, Jochen

(56) Entgegenhaltungen:
- DE-A1-102005 054 593
- GB-A- 952 106
- JP-A- 2003 014 444
- JP-A- 2004 012 167
- US-A1- 2005 041 097
- US-A1- 2010 097 057

## Beschreibung

Die Erfindung betrifft eine Messsonde zur zerstörungsfreien Messung der Dicke dünner Schichten in Hohlräumen von Gegenständen, die durch eine Öffnung zugänglich sind.

Aus der JP 2004 012167 A ist eine Messsonde zur zerstörungsfreien Messung der Dicke dünner Schichten bekannt, welche einen zylindrischen Führungsstab aufweist, an welchem um eine Schwenkachse ein Aufnahmeelement für eine Messsonde gelagert ist. Zur Messung der Dicke dünner Schichten wird zunächst das Auflageelement mit seiner gekrümmten Auflagefläche auf der Messoberfläche aufgelegt und anschließend über eine Rotationsbewegung die Messsonde auf der Messoberfläche aufgesetzt.

Aus der GB 952 106 A ist eine Vorrichtung zur Messung der Wandstärke von Rohren bekannt. Dabei wird über einen Messstab ein Aufsatzelement aufgenommen, welches einen länglichen Träger sowie jeweils am Ende des länglichen Trägers zwei V-förmig ausgebildete Auflageelemente aufweist, wodurch eine prismatische Aufnahme gebildet ist, um die Messvorrichtung an dem Rohr aufzusetzen. Zwischen den Auflageelementen ist eine Messsonde angeordnet.

Aus der US 2005/0041097 A1 geht ein Videoskop mit einem Sensor und einem Bilddetektor hervor.

Aus der US 2010/0097057 A1 geht ein Messgerät hervor, an welchem mehrere Messsonden anschließbar sind, wobei die Messsonden aus einem Anschluss an dem Messgerät bestehen und gegenüberliegend aus einem Messkopf, wobei dazwischenliegend eine biegeschlaffe Verbindungsleitung vorgesehen ist.

Aus der JP 2003 014444 A ist eine Messsonde zur Schichtdickenmessung in Rohren bekannt. Die Messsonde ist an einem in das Rohr einführbaren Stab angeordnet, der durch Aufbringung eines Druckes über die jeweiligen Enden in eine gekrümmte Form übergeführt wird, so dass die Messsonde an der Innenseite des Rohres anliegt.

Aus der DE 10 2005 054 593 A1 ist beispielsweise eine Messsonde zur zerstörungsfreien Messung der Dicke dünner Schichten bekannt, welche in einem Gehäuse zumindest ein Sensorelement aufweist. Diesem Sensorelement ist eine Aufsetzkalotte zugeordnet, so dass die Messsonde über diese Aufsetzkalotte auf der zu messenden Oberfläche einer Beschichtung aufgesetzt werden kann. Im Anschluss kann mit einer solchen Messsonde eine zerstörungsfreie Messung der Schichtdicke durchgeführt werden. Solche Messsonden werden im Allgemeinen zur Durchführung der Messung von Hand auf die Messoberfläche aufgesetzt. Ebenso kann die Verwendung eines Messstatives vorgesehen sein. Dabei ist die Voraussetzung zu erfüllen, dass eine hinreichende Zugänglichkeit zur Messoberfläche gegeben ist, um eine solche Messsonde aufsetzen zu können.

Aufgrund der zunehmenden Qualitätsanforderungen einerseits und dem zunehmenden Kostendruck andererseits wird es erforderlich, dass beispielsweise Hohlraumbeschichtungen ebenso geprüft und überwacht werden. Beispielsweise werden in der Fahrzeugindustrie im Schwellerbereich der Karosserie Hohlräume beschichtet. Dies erfolgt beispielsweise durch eine kathodische Tauchlackierung beziehungsweise auch eine Tauchlackbeschichtung. Die Zugänglichkeit in solchen Hohlräumen kann aufgrund der konstruktiven Ausgestaltung nur über kleine Öffnungen erfolgen.

Der Erfindung liegt die Aufgabe zugrunde, eine Messsonde zu schaffen, durch welche Beschichtungen, insbesondere in Hohlräumen, geprüft beziehungsweise die Schichtdicke von Hohlraumbeschichtungen oder schwer zugänglichen Bereichen zerstörungsfrei geprüft werden können.

Diese Aufgabe wird erfindungsgemäß durch eine Messsonde gemäß den Merkmalen des Anspruchs 1 gelöst. Weitere bevorzugte Ausgestaltungen und Weiterbildungen sind in weiteren Ansprüchen angegeben.

Durch die erfindungsgemäße Messsonde mit einem Griffelement, an welchem ein länglicher und federnd nachgiebiger Führungsstab angeordnet ist, der an seinem freien Ende in einem Gehäuse zumindest einen Messkopf aufnimmt, das in zumindest einem Freiheitsgrad bewegbar zum Führungsstab ist mit zumindest einem Hilfspol benachbart zum zumindest einen Messkopf oder nur mit zwei Messköpfen, wird das Gehäuse mit dem zumindest der Messkopf in eine kleine Öffnung in einen Hohlraum oder in einen von außen schwer zugänglichen Bereich eingeführt und anschließend über den Führungsstab auf eine zu messende Oberfläche im Hohlraum beziehungsweise schwer zugänglichen Bereich zubewegt. Während dem ein- oder mehrmaligen Aufsetzen oder Entlangführen des zumindest einen Messkopfes auf der Beschichtung kann die Schichtdicke der Beschichtung an einer oder verschiedenen Stellen erfasst werden, so dass durch eine solche Messsonde insbesondere Hohlraumbeschichtungen auf ihre Qualität geprüft werden können. Durch den länglichen und federnd nachgiebigen Führungsstab kann eine Mindestkraft auf den zumindest einen Messkopf aufgebracht werden, um ein sicheres Aufsetzen des zumindest einen Messkopfes auf der zu messenden Oberfläche zu erzielen. Gleichzeitig kann in einfacher Weise auch ein Aufsetzen an einer gekrümmten Messoberfläche ermöglicht werden, ohne dass der Führungsstab entsprechend zur Messoberfläche ausgerichtet ist. Durch die auslenkbare Lagerung des zumindest einen Messkopfes mit zumindest einem Freiheitsgrad zum Führungsstab kann der Messkopf unabhängig der Halteposition des Griffelementes der Messsonde auf der Messoberfläche sich selbständig aufrichten und lagerichtig zur Durchführung der Schichtdickenmessung aufliegen, da sich die Halteposition des feststehenden Führungsstabes und somit die Winkelposition des Führungsstabes zum Messkopf während dem Aufsetzen oder Entlangführen des Messkopfes auf der Messoberfläche ändert und anpasst. Somit wird eine Messsonde beziehungsweise eine Innensonde geschaffen, welche eine einfache Handhabung bei der Messung und Prüfung einer Beschichtung in einem Hohlraum ermöglicht.

Eine bevorzugte Ausgestaltung der Messsonde sieht vor, dass der zumindest eine Messkopf vorzugsweise austauschbar in einem Gehäuse angeordnet ist, welche in zumindest einem Freiheitsgrad bewegbar zum Führungsstab befestigt ist. Diese Anordnung weist den Vorteil auf, dass der Messkopf für unterschiedliche Anwendungsfälle austauschbar und geschützt in dem Gehäuse angeordnet ist.

Eine bevorzugte Ausführungsform der Messsonde sieht vor, dass das Gehäuse und der Führungsstab durch zumindest eine Gelenkachse miteinander verbunden sind, wobei insbesondere eine Gelenkachse vorgesehen ist, die senkrecht zur Längsachse des Messkopfes ausgerichtet ist, wobei die Längsachse des Messkopfes im Wesentlichen senkrecht zur zu prüfenden Oberfläche ausgerichtet ist. Diese Anordnung ist konstruktiv einfach ausgestaltet und ermöglicht während des Aufsetzens des Messkopfes auf die Messoberfläche einen Ausgleich zwischen der Führungsrichtung der Messsonde und der Messoberfläche.

Eine alternative Ausführungsform der Messsonde sieht vor, dass das den Messkopf aufnehmende Gehäuse und der Führungsstab durch ein Kugelgelenk miteinander verbunden sind. Ein solches Kugelgelenk ermöglicht eine dreidimensionale Veränderung der Lage des Messkopfes zum Führungsstab. Dadurch kann eine sehr flexible Anpassung der Lage des zumindest einen Messkopfes zur Messoberfläche erfolgen.

Eine weitere alternative Ausführungsform der Erfindung sieht vor, dass der zumindest eine Messkopf an einer Trägerplatte angeordnet ist, welche durch mehrere streifenförmige, insbesondere flach streifenförmige, Federelemente gehalten und gegenüberliegend mit einem Anschlusselement am Führungsstab anschließbar ist. Diese Anordnung weist den Vorteil auf, dass die nebeneinander angeordneten streifenförmigen Federelemente beim Aufsetzen der Messsonde an einer zu prüfenden Oberfläche eine zumindest geringe Anpresskraft auf den zumindest einen Messkopf zu dessen sicheren Anlage auf der Messoberfläche ermöglichen. Darüber hinaus ist gleichzeitig durch die nebeneinander angeordneten streifenförmigen Federelemente eine zumindest geringfügige Verdrehung um die gemeinsame Längsachse der einzelnen Federelemente ermöglicht. Somit weist diese Anordnung den Vorteil auf, dass eine reibungsfreie Lagerung des zumindest einen Messkopfes bezüglich einer Auslenkung und Schwenkbeweglichkeit zum Führungsstab gegeben ist. Bevorzugt sind die streifenförmigen Federelemente mit einem Anschlusselement gehalten und verbunden, welches in einfacher Weise am Führungsstab anschließbar ist. Dadurch kann eine einfache Montage und Demontage erfolgen. Ergänzend kann durch das Anschlusselement eine einfache Kontaktierung der am Führungsstab entlang geführten Signalleitungen, beispielsweise durch eine Klemmung, über eine Schraub-, Rast- oder Klemmverbindung mit den Signalleitungen am Führungsstab erfolgen.

Eine bevorzugte Ausgestaltung dieser alternativen Ausführungsform sieht vor, dass die Federelemente in einer Ebene nebeneinander und mit Abstand zueinander angeordnet sind. Dadurch kann die radiale Auslenkung des Führungskopfes zur Längsachse des Führungsstabes beziehungsweise der Federelemente bestimmt werden. Gleichzeitig kann die Federkraft in Aufsetzrichtung erhöht sein. Die zur Trägerplatte ausgerichteten Enden der Federelemente greifen bevorzugt am Schwerpunkt der Trägerplatte oder im Schwerpunkt der Sondeneinheit an. Dadurch kann eine lagerichtige Anordnung des zumindest einen Messkopfes auf der zu prüfenden Messoberfläche sichergestellt sein. Eine solche Sondeneinheit kann beispielsweise aus einer Trägerplatte mit einem Messkopf und zumindest einem Hilfspol oder aus zwei verschiedenen Messköpfen und gegebenenfalls einem Hilfspol bestehen, so dass eine Zwei- oder Dreipunktauflage gegeben ist. Alternativ können auch drei Messköpfe, die alle voneinander abweichen oder nur einer von den anderen abweicht, vorgesehen sein.

Des Weiteren sind die streifenförmigen Federelemente bevorzugt elektrisch leitend. Dies ermöglicht, dass diese Federelemente eine Doppelfunktion übernehmen und keine zusätzlichen elektrischen Leitungen mehr anzubringen sind. Dadurch kann die gesamte Sondeneinheit in der Masse erheblich reduziert und von weiteren störenden Krafteinflüssen, die sich nachteilig auf die Messung auswirken, beseitigt werden.

Des Weiteren ist bei dieser alternativen Ausführungsform vorgesehen, dass die Trägerplatte in das Gehäuse einsetzbar ist und die Federelemente frei aus dem Gehäuse herausführbar angeordnet sind. Somit tragen die Federelemente auch das Gehäuse, welches zum Schutz der einzelnen Elemente dient.

Des Weiteren ist zwischen der Trägerplatte und dem Gehäuse bevorzugt ein Kraftspeicherelement angeordnet, welches den zumindest einen Messkopf gegenüber dem Gehäuse eintauchbar lagert. Dadurch kann ein Schutz für den zumindest einen Messkopf bei zu stark aufgebrachter Kraft erzielt werden. Dieses Kraftspeicherelement kann bevorzugt im Schwerpunkt der Trägerplatte beziehungsweise der Sondeneinheit angreifen.

Vorteilhafterweise ist benachbart zum zumindest einen Messkopf zumindest ein Hilfspol vorgesehen. Dadurch kann ein sogenannter Gleitschuh geschaffen werden, der in zumindest einem Freiheitsgrad bewegbar zum Führungsstab angeordnet ist und unabhängig der Ausrichtung des Führungsstabes ein definiertes Aufsetzen des Sensorelementes auf der Messoberfläche beziehungsweise eine definierte Ausrichtung des Sensorelementes zur Messoberfläche ermöglicht. Der zumindest eine Messkopf und der zumindest eine Hilfspol sind bevorzugt benachbart zueinander angeordnet, so dass durch den Gleitschuh die Messsonde im Wesentlichen rechtwinklig zur Messoberfläche ausgerichtet wird. Dadurch können Messfehler aufgrund falscher Handhabungen erheblich minimiert werden. Insbesondere ist der Hilfspol als Aufsetzkalotte, als Laufrolle oder als Gleitelement ausgebildet. Alle Ausführungsformen haben gemeinsam, dass diese sanft auf die Oberfläche aufgesetzt werden und sich selbständig zur Messoberfläche ausrichten und gegebenenfalls entlang der Oberfläche gleiten, um Beschädigungen zu vermeiden, wobei der Hilfspol bevorzugt dem Messkopf nacheilend während der Durchführung einer Messung angeordnet ist. Bei der Ausführungsform, bei welcher bevorzugt das Gehäuse über eine Schwenkachse oder ein Kugelgelenk zum Führungsstab verbunden ist, wird der zumindest eine Hilfspol am Gehäuse angeordnet. Bei der weiteren alternativen Ausführungsform, bei welcher der zumindest eine Messkopf an der Trägerplatte angeordnet ist, wird bevorzugt der zumindest eine Hilfspol ebenfalls an der Trägerplatte angeordnet.

Nach einer bevorzugten Ausgestaltung der Messsonde ist vorgesehen, dass der zumindest eine Messkopf eine Schichtdicke nach einem magnetinduktiven Messverfahren, nach einem Wirbelstromverfahren oder nach einem Gleichfeldverfahren beziehungsweise einem magnetischen Verfahren mit einer Hallsonde ermittelt und der zumindest eine weitere Messkopf eine Schichtdicke nach einem der vorgenannten Verfahren ermittelt. Somit kann eine solche Messsonde beim Einsatz von zwei oder drei verschiedenen Messköpfen universell eingesetzt werden, wobei dieselben oder voneinander abweichende Messköpfe benachbart zueinander angeordnet sind, ohne dass ein Austausch der Messköpfe zum Führungsstab erforderlich ist. Bei dieser Ausführungsform ist bevorzugt vorgesehen, dass ein Drehpunkt zwischen diesen zwei voneinander abweichenden Messköpfen in einer durch die nebeneinander angeordneten streifenförmigen Federelemente gebildeten Längsachse liegt oder ein Schwerpunkt zwischen zwei Messköpfen und einem Hilfspol oder drei Messköpfen gebildet wird.

Bevorzugt sind die beiden voneinander abweichenden Messköpfe bei der Messung von gekrümmten Oberflächen in einer Linie zur Messung entlang einer Mantellinie entlang der Oberfläche zum Führungsstab oder Griffelement ausgerichtet. Dadurch kann eine sichere Anlage auf der Messoberfläche erfolgen und präzise Messergebnisse erzielt werden.

Des Weiteren sind bevorzugt zwei Hilfspole vorgesehen, welche zusammen mit dem einen Messkopf eine Dreipunktauflage bilden. Alternativ hierzu können auch zwei Messköpfe, insbesondere voneinander abweichende Messköpfe, mit einem Hilfspol eine Dreipunktauflage bilden. Dadurch kann sich das Gehäuse beziehungsweise die Trägerplatte unabhängig der Ausrichtung des Führungsstabes selbstständig zur Messoberfläche ausrichten, so dass der Messkopf senkrecht zur Messoberfläche aufliegt. Somit ist eine im Wesentlichen senkrechte Positionierung des Messkopfes zur Messoberfläche auch dann möglich, wenn die Messoberfläche sich in der Orientierung ändert oder beispielsweise einen gekrümmten Verlauf aufweist.

Diese Messsonde weist bevorzugt eine Anordnung auf, bei welcher im Bereich zwischen dem Messkopf und dem zumindest einen Hilfspol eine Gelenkachse oder ein Kugelgelenk zur Verbindung des Gehäuses mit dem Führungsstab vorgesehen ist. Durch diese Gelenkachse wird das Gehäuse gelenkig beziehungsweise schwenkbar zum Führungsstab aufgenommen. Dadurch kann der Messkopf gemeinsam mit dem Hilfspol lagerichtig zur Messoberfläche positioniert und unabhängig der Ausrichtung des Führungsstabes auf der Messoberfläche aufgesetzt werden.

Des Weiteren ist die das Gehäuse und den Führungsstab verbindende Gelenkachse oder das Kugelgelenk bevorzugt näher zum Messkopf als zum Hilfspol positioniert. Dadurch wird ein zumindest geringes Aufsetz- oder Anlagemoment auf den Messkopf bewirkt, da der Hebelarm zwischen der Gelenkachse und dem Hilfspol zumindest geringfügig größer als der Hebelarm zwischen der Gelenkachse und dem Messkopf ist. Somit kann ohne weitere zusätzliche Hilfsmittel ein sicheres Aufsetzen des Messkopfes auf der zu prüfenden Oberfläche sichergestellt werden.

Des Weiteren ist der Messkopf bevorzugt entlang seiner Längsachse zumindest geringfügig bewegbar im Gehäuse angeordnet. Dadurch kann ein sicheres Anliegen des Messkopfes an der Messoberfläche sichergestellt werden. Gleichzeitig kann eine zu hohe Andrückkraft verhindert sein.

Eine alternative Ausgestaltung der Messsonde sieht zwischen dem Führungsstab und dem Messkopf eine Verdrehsicherung oder ein Kraftspeicherelement vor, welches den Messkopf in einer zum Führungsstab geneigten oder vordefinierten Ausgangslage positioniert. Dadurch kann bei Einführen der Messsonde durch eine Öffnung in einen Hohlraum sichergestellt sein, dass der Messkopf in einer bekannten Lage zum Führungsstab ausgerichtet ist und anschließend durch eine einfache Handhabung ein sicheres Aufsetzen des Messkopfes auf die zu prüfende Oberfläche ermöglicht, obwohl diese Positionierung des Messkopfes innerhalb des Hohlraumes von außen schlecht oder nicht mehr sichtbar ist.

Der Führungsstab der Messsonde weist bevorzugt einen länglichen Grundkörper mit einem gekrümmten Verlauf auf, wobei der Führungsstab bezüglich dessen Querschnittsachsen steif und in seiner Längsrichtung zumindest geringfügig federnd nachgiebig ausgebildet ist. Dadurch ist der Führungsstab relativ torsionssteif ausgebildet, so dass lediglich ein zumindest geringes Flachdrücken der Krümmung oder ein stärkeres Neigen der Krümmung des Führungsstabes ermöglicht ist. Dadurch ist eine präzise Führung des Messkopfes gegeben. Durch diesen bevorzugt gekrümmten Verlauf des Führungsstabes wird selbst bei einem sehr kleinen Hohlraum ein gezieltes und hinreichendes Eintauchen und Einführen des Führungsstabes in den Hohlraum mit nachfolgendem sicheren Aufsetzen des zumindest einen Messkopfes ermöglicht. Alternativ kann der Führungsstab auch einen geradlinigen Verlauf aufweisen und somit in Rohre, Profile, Schläuche oder dergleichen einführbar sein, um eine Messung einer Innenbeschichtung durchzuführen.

Der Führungsstab weist bevorzugt an seiner Krümmungsinnenseite zumindest eine Gleit- oder Anlagefläche auf. Diese Gleit- oder Anlagefläche ermöglicht ein gezieltes und verkippungsfreies Führen des Messkopfes entlang einer Kante an einer in den Hohlraum führenden Öffnung.

Des Weiteren weist der Führungsstab bevorzugt eine sich in Längsrichtung erstreckende U-förmige Vertiefung auf, welche insbesondere an einer Innenseite des gekrümmten Grundkörpers des Führungsstabes vorgesehen ist, in welcher zum Messkopf führende Signalleitungen geführt sind. Diese Anordnung ermöglicht gleichzeitig eine geschützte Aufnahme der Signalleitungen, da insbesondere die Gleit- und Anlageflächen, die an den freien U-förmigen Schenkeln der Vertiefungen vorgesehen sind, geringfügig gegenüber den Signalleitungen hervorstehen und diese schützen.

Des Weiteren kann der Führungsstab über seine gesamte Länge gekrümmt ausgebildet sein. Bevorzugt ist dabei eine gleichmäßige Krümmung vorgesehen. Alternativ kann diese Krümmung auch verschiedene Radien aufweisen, die an die Hohlraumgeometrie angepasst sind und eine optimale Führung des Messkopfes entlang der im Hohlraum zu prüfenden Oberfläche oder Beschichtung ermöglichen.

Eine bevorzugte Ausführungsform der Erfindung sieht vor, dass der Führungsstab mehrteilig ausgebildet ist und dass vorzugsweise zwei benachbarte Stababschnitte durch ein Kupplungselement miteinander verbindbar sind. Diese Ausgestaltung ermöglicht, dass zum einen unterschiedliche Längen eines Führungsstabes ausgebildet und an den Einsatzfall angepasst werden können. Zum anderen wird dadurch eine anwendungsspezifische Anpassung an unterschiedliche Zugänglichkeiten zu den Hohlräumen und Geometrien der Hohlräume ermöglicht. Beispielsweise kann bei sehr kleinen Hohlräumen ein eher geradlinig oder weniger gekrümmter Führungsstab ausgebildet werden, wohingegen bei anderweitigen Hohlräumen ein eher gekrümmter Führungsstab zum tiefen Einführen in den Hohlraum ausgebildet werden kann. Die Kupplungselemente bilden bevorzugt mit dem Stababschnitt eine Steckverbindung, die beispielsweise verrastend oder durch eine Presspassung fest miteinander verbunden sind und vorzugsweise auch wieder für einen modularen Aufbau voneinander lösbar sind.

Eine weitere bevorzugte Ausgestaltung des mehrteiligen Führungsstabes sieht vor, dass das Kupplungselement eine flexible Knickstelle aufweist, welche bevorzugt nach einer zwangsweisen Auslenkung in dessen Ausgangsposition zurückkehrt. Diese flexible Knickstelle kann beispielsweise aus Kunststoff, Metall oder dergleichen ausgebildet werden. Dadurch wird einerseits eine zumindest durch das Griffelement übertragene Aufsetzvorrichtung des zumindest einen Messkopfes durchgeführt, andererseits jedoch gleichzeitig wiederum ein federnd nachgiebiger Führungsstab ausgebildet.

Des Weiteren weist das Kupplungselement bevorzugt zum Anschluss der Signalleitungen einen Steckkontakt für eine Durchkontaktierung auf. Beispielsweise kann beim Einstecken des Stababschnittes in das Kupplungselement eine automatische Kontaktierung mit einer Verbindungsleitung in dem Kupplungselement erfolgen, um den benachbarten Stababschnitt, der ebenfalls vom selben Kupplungselement aufgenommen wird, mit dem vorgehenden Stababschnitt elektrisch zu kontaktieren beziehungsweise die in dem Stababschnitt geführten elektrischen Leitungen oder Signalleitungen zu verbinden.

In einer ersten vorteilhaften Ausgestaltung des Führungsstabes ist dieser aus einem metallischen Material, insbesondere aus Federstahl, ausgebildet und vorzugsweise durch eine spanende Bearbeitung oder durch einen Biegestanzvorgang herstellbar. Solche Führungsstäbe weisen eine hohe Standfestigkeit und eine hohe Nachgiebigkeit mit einer hohen Rückfedereigenschaft auf, um nach einer Auslenkung wieder in die Ursprungsform zurückzukehren.

Eine weitere alternative Ausgestaltung des Führungsstabes sieht vor, dass dieser aus einem thermoplastischen Elastomer hergestellt ist. Dieser Kunststoff kann analoge Eigenschaften zum metallischen Material, insbesondere Federstahl, aufweisen. Ebenso kann dieser aus Kunststoff bestehende Führungsstab durch eine spanende Bearbeitung als auch durch eine Press-Biege-Bearbeitung hergestellt werden.

Eine weitere alternative Ausgestaltung des Führungsstabes sieht vor, dass dieser aus einer Kunststoffverbundmatrix hergestellt ist, in welcher die Leiterbahnen vorzugsweise eingebettet sind. Bei einer solchen Kunststoffverbundmatrix kann beispielsweise ein Glasfasergewebe, Kohlefasergewebe oder ein weiteres faserverstärktes Kunststoffmaterial verwendet werden, welches bevorzugt in eine Werkzeugform eingelegt wird, um die Kontur des Führungsstabes durch ein weiteres Ausgießen mit einem Harz oder dergleichen herzustellen. Gleichzeitig können die Signalleitungen eingebunden werden. Ebenso kann bei der Herstellung der Signalleitungen gleichzeitig die Kontur des Führungsstabes hergestellt werden.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Seitenansicht einer erfindungsgemäßen Messsonde,
- Figur 2: eine weitere schematische Ansicht der Messsonde gemäß Figur 1,
- Figur 3: eine schematisch vergrößerte Schnittansicht eines Messkopfes der Messsonde gemäß Figur 1,
- Figur 4: eine schematische Schnittdarstellung entlang der Linie IV-IV in Figur 2,
- Figur 5: eine alternative Ausgestaltung eines Führungsstabes gemäß Figur 4,
- Figuren 6a und b: verschiedene Arbeitspositionen der Messsonde gemäß Figur 1 in einem Hohlraum zur Schichtdickenmessung,
- Figur 7: eine schematische Schnittdarstellung einer alternativen Ausführungsform zu Figur 3,
- Figur 8: eine schematische Ansicht von unten auf die Ausführungsform gemäß Figur 6,
- Figur 9: eine schematische Schnittdarstellung einer weiteren alternativen Ausführungsform zu Figur 1,
- Figur 10: eine perspektivische Ansicht auf einen Messkopf gemäß der Ausführungsform in Figur 9,
- Figur 11: eine schematische Detailansicht auf den Messkopf mit daran angeordneten Federelementen,
- Figur 12: eine schematische Ansicht von oben auf eine alternative Ausführungsform zu Figur 9,
- Figur 13: eine schematische Seitenansicht der Ausführungsform gemäß Figur 12 und
- Figur 14: eine schematische Ansicht von oben auf eine alternative Ausführungsform zu Figur 12.

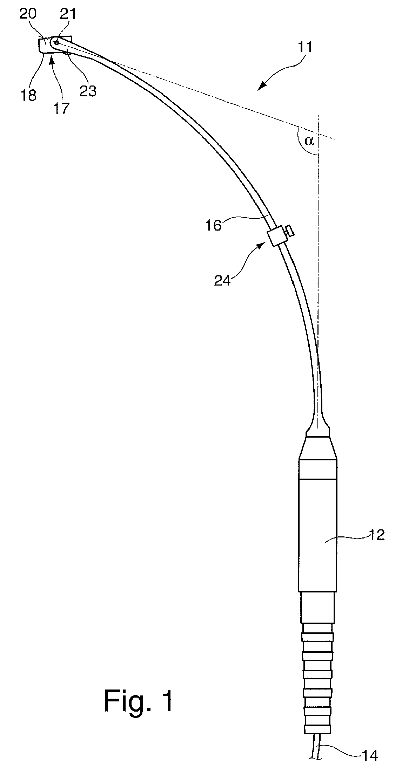

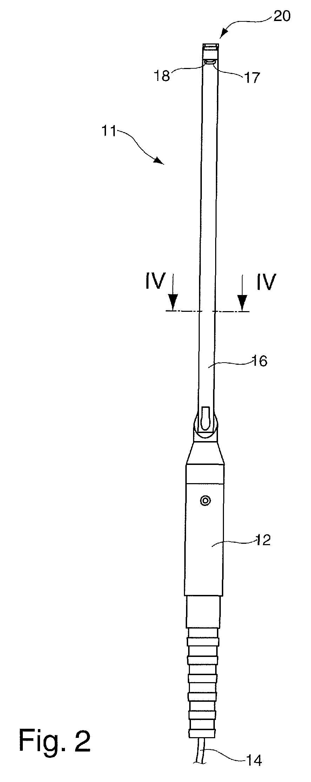

In Figur 1 ist eine schematische Seitenansicht einer erfindungsgemäßen Messsonde 11 dargestellt. Eine weitere schematische Ansicht der Messsonde geht aus Figur 2 hervor. Eine solche Messsonde 11 wird auch als Innenmesssonde oder Innensonde bezeichnet, welche zur zerstörungsfreien Messung der Dicke dünner Schichten, insbesondere in Hohlräumen, die beispielsweise durch eine Öffnung zugänglich sind, oder in schwer zugänglichen Bereichen eingesetzt wird.

Die Messsonde 11 umfasst ein Griffelement 12, in welches eine Anschlussleitung 14 mündet, welche die Messsonde 11 mit einer nicht näher dargestellten Auswerteeinrichtung verbindet. Das Griffelement 12 nimmt einen Führungsstab 16 auf, der an seinem vorderen Ende einen Messkopf 17 mit zumindest einem Sensorelement 18 aufweist, welcher mit zumindest einem Freiheitsgrad zum Führungsstab 16 auslenkbar gehalten wird. Der Messkopf 17 ist in einem Gehäuse 20 angeordnet, welches beispielsweise über eine Gelenkachse 21 mit dem Führungsstab 16 verbunden ist. Dabei weist der Führungsstab 16 am vorderen Ende eine U-förmige Aussparung oder Gabelung auf und umfasst Laschen 23, die teilweise das Gehäuse 20 umgeben, so dass das Gehäuse 20 zwischen den Laschen 23 am Führungsstab 16 positioniert und um die Gelenkachse 21 schwenkbar geführt ist. An dem Führungsstab kann des Weiteren längsverschiebbar entlang dem Führungsstab ein Anschlag 24 vorgesehen sein, durch welchen eine Eintauchtiefe des Führungsstabes 16 in einen Hohlraum oder schwer zugänglichen Raum begrenzt und bestimmt wird. Dadurch kann bei mehreren Messgegenständen immer an derselben Messstelle aufgrund der definierten Positionierung des Messkopfes 17 zum Messgegenstand über den Anschlag 24 eine vergleichbare Messung durchgeführt werden.

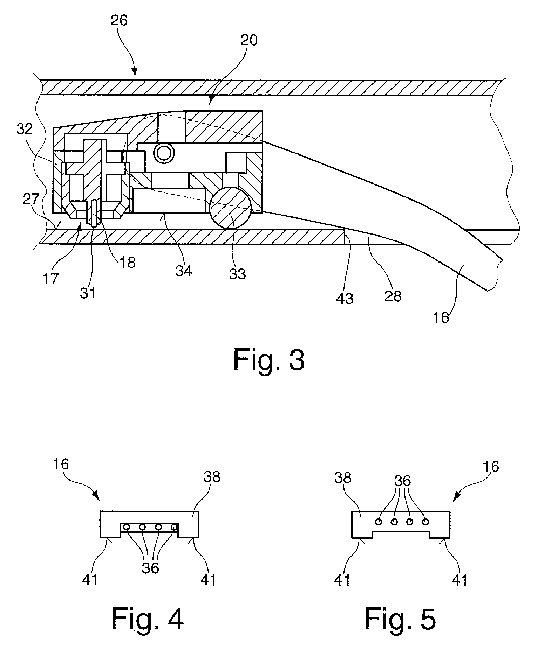

In Figur 3 ist eine schematisch vergrößerte Schnittdarstellung des Gehäuses 20 mit dem darin angeordneten Messkopf 17 und einem vorderen Ende des Führungsstabes 16 dargestellt. Die Messsonde 11 ist mit dessen Messkopf 17 in einem Hohlraum 26 auf einer zu prüfenden Oberfläche 27 positioniert, wobei der Messkopf 17 über eine Öffnung 28 im Hohlraum 26 in das Innere des Hohlraumes 26 einführbar ist.

Ein solcher Hohlraum 26 kann beispielsweise in einer Karosserie eines Kraftfahrzeuges, insbesondere im Schwellerbereich oder einer A-, B- oder C-Säule der Karosserie, ausgebildet sein. Ebenso können solche Hohlräume 26 in weiteren Bereichen der Karosserie, in weiteren Gegenständen, Vorrichtungen oder Einrichtungen vorhanden sein, die anwendungsspezifisch eine Beschichtung aufweisen, um beispielsweise eine vorzeitige Korrosion zu vermeiden. Zur Beschichtung von Hohlräumen 26 in der Karosserie von Fahrzeugen wird bevorzugt eine Tauchlackierung beziehungsweise kathodische Tauchlackierung eingesetzt. Durch die Messsonde 11 werden die Oberflächen 27 im Hohlraum 26 bezüglich der Schichtdicke oder der Schichtqualität zerstörungsfrei geprüft.

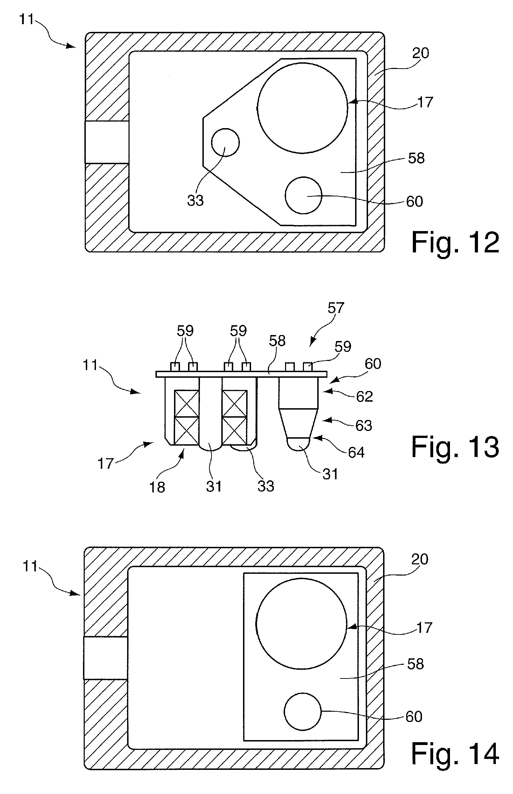

Das Gehäuse 20 nimmt insbesondere im vorderen Bereich den Messkopf 17 auf. Dieser umfasst das Sensorelement 18, welches im Wesentlichen senkrecht zur zu prüfenden Oberfläche 27 ausgerichtet ist. Das Sensorelement 18 weist am vorderen Ende eine Aufsetzkalotte 31 auf. Die Aufsetzkalotte 31 und das zumindest eine Sensorelement 18 liegen bevorzugt beide in derselben Längsachse. Ein solches Sensorelement 18 kann beispielsweise durch eine Primär- und Sekundärspule, mit einem Magneten, mit zumindest einer Spule auf Topfmagneten oder als nicht abgeschirmter Bipol ausgebildet sein. Ein solches Sensorelement 18 ermöglicht eine Messung nach dem magnetinduktiven Verfahren. Das magnetinduktive Messverfahren eignet sich zur Messung der Dicke von Nichteisenmetallschichten, wie beispielsweise Chrom, Kupfer und Zink oder dergleichen auf magnetisierbaren Grundwerkstoffen, wie beispielsweise Stahl und Eisen als auch für Farb-, Lack- und Kunststoffschichten auf magnetisierbaren Grundwerkstoffen, wie beispielsweise Stahl und Eisen. Der Messbereich umfasst beispielsweise eine Schichtdicke bis zu 1800 µm, bevorzugt wird eine Frequenz von weniger als 300 Hz verwendet. Alternativ kann ein solches Sensorelement 18 zur Durchführung der Messung nach dem Wirbelstromverfahren eingesetzt werden, das heißt, dass die zerstörungsfreie Messung der Dicke von elektrisch nicht leitenden Schichten auf Nichteisenmetallen, wie beispielsweise von Farben, Lacken, Kunststoffen, auf Aluminium, Kupfer, Messing, Edelstahl oder anderen anodisierten Schichten auf Aluminium in einem hochfrequenten Wechselfeld, gegeben ist. Des Weiteren kann ein Messkopf 60 mit einem Sensorelement 61, wie in Figur 13 dargestellt ist, vorgesehen sein, welcher einen Permanentmagneten 62 umfasst, der an einem Feldkonzentrator 63 nahe zu einem Hallsensor 64 vorgesehen ist. Dieser Hallsensor 64 liegt unmittelbar hinter der Aufsetzkalotte 31. Dadurch kann eine Messung nach dem magnetischen Gleichfeldverfahren durchgeführt werden.

Das Sensorelement 18 ist bevorzugt zumindest geringfügig beweglich in dem Messkopf 17 beziehungsweise einer Messkopfaufnahme 32 zum Gehäuse 20 angeordnet. Die Messkopfaufnahme 32 ist in der Höhe vorzugsweise einstellbar im Gehäuse 20 positioniert. Am gegenüberliegenden Ende des vorzugsweise länglich-rechteckförmigen Gehäuses 20 ist ein Hilfspol 33 vorgesehen. Dieser Hilfspol 33 kann beispielsweise ebenso durch eine Aufsetzkalotte ausgebildet sein. Analog kann eine fest im Gehäuse 20 eingepresste Kugel, eine Laufrolle oder dergleichen vorgesehen sein. Ein Auflagepunkt des Hilfspols 33 ist bevorzugt in gleichem Abstand zu einer Gehäuseunterseite 34 wie das Sensorelement 18 beziehungsweise dessen Aufsetzkalotte 31 angeordnet.

Durch die Ausgestaltung des Gehäuses 20 mit einem Hilfspol 33 und die Aufnahme des Messkopfes 17 wird ein sogenannter Gleitschuh geschaffen, der in einfacher Weise durch den Führungsstab 16 an einer zu prüfenden Oberfläche 27 entlang geführt werden kann und sich selbständig zur zu messenden Oberfläche 27 ausrichtet.

Zwischen dem Hilfspol 33 und dem Sensorelement 18 beziehungsweise Messkopf 17 ist die Gelenkachse 21 angeordnet, durch welche das Gehäuse 20 um einen Freiheitsgrad schwenkbar zum Führungsstab 16 angeordnet ist. Alternativ kann das Gehäuse 20 um mehrere Freiheitsgrade zum Führungsstab 16 durch mehrere Gelenkachsen gelenkig angeordnet sein.

Bei der in Figur 3 dargestellten Ausführungsform ist die Gelenkachse 21 vorzugsweise in ihrem Abstand näher zum Messkopf 17 als zum Hilfspol 33 positioniert. Dadurch kann beim Aufsetzen der Messsonde 11 mit dem Messkopf 17 auf der Oberfläche 27 erzielt werden, dass das Gehäuse 20 zunächst über den Hilfspol 33 auf der Oberfläche 27 aufgesetzt wird und anschließend aufgrund der Hebelverhältnisse ein sicheres Aufsetzen des Messkopfes 17 auf derselben Oberfläche 27 erzielt und auch beibehalten bleibt. Zur sicheren Messung von Beschichtungen im Hohlraum 26 oder schwer zugänglichen Bereich ist eine Dreipunktauflage von Vorteil. Eine solche Dreipunktauflage kann beispielsweise durch einen Messkopf und zwei Hilfspole oder, wie nachfolgend im Detail noch beschrieben sein wird, durch zwei Messpole beziehungsweise zwei Messköpfe, durch zwei Messpole beziehungsweise zwei Messköpfe und einen Hilfspol oder durch drei Messpole beziehungsweise drei Messköpfe vorgesehen sein.

Das Sensorelement 18 ist bevorzugt gemeinsam mit dem Messkopf 17 austauschbar am Gehäuse 20 vorgesehen. Dabei ist insbesondere eine Steckverbindung zwischen dem Sensorelement 18 und Signalleitungen 36 ausgebildet. Die Signalleitungen 36 erstrecken sich vom Gehäuse 20 entlang des Führungsstabes 16 bis in das Griffelement 12 hinein. In Abhängigkeit der Ausgestaltung der Messsonde 11 kann in dem Griffelement 12 ein Steckkontakt vorgesehen sein, um die Signalleitungen 36 mit den Anschlussleitungen 14 zu verbinden. Diese Ausführungsform weist den Vorteil auf, dass mit demselben Griffelement 12 verschiedene Führungsstäbe 16 austauschbar aufgenommen werden können, wobei die Führungsstäbe 16 in der Größe, Form und Krümmung und/oder in der Größe und der Art des Messkopfes 17 unterschiedlich ausgebildet sein können. Alternativ kann die Signalleitung 36 auch einstückig durch das Griffelement 12 hindurchgeführt und als Anschlussleitung 14 herausgeführt werden.

In Figur 4 ist eine schematische Schnittdarstellung entlang der Linie IV-IV in Figur 2 dargestellt, aus der hervorgeht, wie beispielsweise ein Querschnitt des Führungsstabes 16 ausgebildet sowie die Signalleitungen 36 zum Führungsstab 16 angeordnet und geführt sein können.

Der Führungsstab 16 weist gemäß einer ersten Ausführungsform einen länglich-rechteckigen Grundkörper 38 auf, der beispielsweise auf einer Außenseite eine U-förmige Vertiefung 39 umfasst. Diese Vertiefung 39 ist bevorzugt auf einer Innenseite bezüglich der Krümmung des Führungsstabes 16 vorgesehen. In der U-förmigen Vertiefung 39 sind die Signalleitungen 36 geschützt positioniert und können durch eine Klebeverbindung oder Klemmverbindung fixiert sein. Ebenso können die Signalleitungen 36 in die U-förmige Vertiefung 39 eingegossen werden. Diese Ausführungsform weist des Weiteren den Vorteil auf, dass benachbart zur U-förmigen Vertiefung 39 Anlageflächen 41 ausgebildet sind, welche gegenüber den Signalleitungen 36 erhaben sind. Diese Anlageflächen 41 dienen als Abriebschutz für die Signalleitungen 36 und können gleichzeitig als Führung entlang einer Kante 43 der Öffnung 28 bei der Durchführung einer Messung entlang gleiten, so dass die Signalleitungen 36 nicht beschädigt werden.

Der Führungsstab 16 weist bevorzugt in seiner Längsrichtung eine Krümmung auf, wie dies beispielsweise aus Figur 1 hervorgeht. Diese Krümmung kann entlang eines einzigen Radius erfolgen. Ebenso kann die Krümmung diskontinuierlich sein, wobei unterschiedliche Krümmungsradien aneinander gereiht sein können. Unabhängig von verschieden ausgestalteten Abschnitten der Krümmung beziehungsweise der Krümmungsverläufe weist der Führungsstab 16 einen gebogenen oder gekrümmten Verlauf auf, so dass eine Achse entlang den Laschen am Ende des Führungsstabes mit einer Längsachse des Griffelementes 12, an der sich der Führungsstab erstreckt, einen Winkel • zwischen 90° und 180° hat. Darüber hinaus können zwischen gekrümmten Abschnitten auch geradlinig verlaufende Abschnitte vorgesehen sein.

Im Ausführungsbeispiel gemäß Figur 4 ist der Führungsstab 16 aus einem Federstahl ausgebildet und die U-förmige Vertiefung 39 durch eine Fräsbearbeitung hergestellt. Ebenso kann ein umgeformtes oder gezogenes Profil vorgesehen sein, in welches in Abhängigkeit der Anwendung eine Krümmung durch Materialabtrag oder ein Krümmungsverlauf durch eine Biegung eingebracht wird. Alternativ kann der Führungsstab 16 gemäß Figur 4 auch aus einem Kunststoffmaterial oder faserverstärkten Kunststoff ausgebildet sein. Die Auswahl der Materialien ist dabei derart vorzusehen, dass eine zumindest geringe Elastizität und federnde Nachgiebigkeit gegeben ist.

In Figur 5 ist eine alternative Ausführungsform zu Figur 4 des Führungsstabes 16 im Querschnitt dargestellt. Bei dieser Ausführungsform sind beispielsweise die Signalleitungen 36 als mehradrige Leiterbahn ausgebildet, und die Leiterbahn weist beispielsweise eine Kunststoffummantelung auf, welche dieselben Eigenschaften bezüglich der federnden Nachgiebigkeit aufgrund der Krümmung und Steifigkeit sowie der Querrichtung des Querschnitts und der Torsion umfasst. Zum erleichterten Verschieben des Messkopfes 17 innerhalb des Hohlraumes 26 ist auch bei dieser Ausführungsform bevorzugt eine Anlagefläche 41 aus zwei schmalen Stirnseiten ausgebildet.

In einer nicht näher dargestellten alternativen Ausführungsform des Führungsstabes 12 kann eine Kombination der Ausführungsform des Führungsstabes der Figuren 4 und 5 gegeben sein. Beispielsweise kann an dem Griffelement anschließend der Führungsstab 16 zunächst aus einem Federstahl ausgebildet sein. Beispielsweise kann der Führungsstab 16 aus Federstahl nach der Hälfte der Länge oder nach 2/3 der Länge ausschließlich aus den mit Kunststoff oder einer Kunststoffmatrix ummantelten Signalleitungen 36 bestehen.

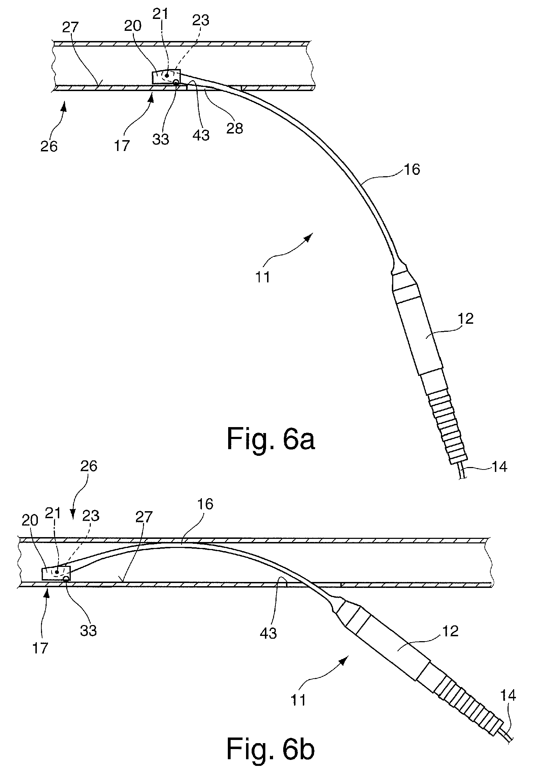

In den Figuren 6a und 6b sind zwei unterschiedliche Arbeitspositionen der Messsonde 11 im Hinblick auf den Hohlraum 26 dargestellt. Die Figur 6a zeigt eine erste Arbeitsposition, die unmittelbar nach dem Einführen der Messsonde 11 in den Hohlraum 26 ragt, und das Gehäuse 20 mit dem Messkopf 17, das zu Beginn der Messung an der Oberfläche 27 vorgesehen ist. Durch den zumindest einen Freiheitsgrad bezüglich der Gelenkigkeit des Messkopfes 17 zum Führungsstab 16 kann der Messkopf 17 nach dem Hindurchführen durch die Öffnung 28 auf der zu prüfenden Oberfläche 27 aufliegen. Im Anschluss daran wird die Messsonde 11 weiter in das Innere des Hohlraumes 26 verschoben, wobei ein Nachführen des Griffelementes 12 und eine Änderung der Lage des Führungsstabes 16 entlang der Oberfläche 27 hineingeführt zum Gehäuse 20 erfolgt. Die Figur 6b zeigt beispielsweise eine solche weitere Arbeitsposition. Aufgrund der Krümmung des Führungsstabes 16 und Positionierung der Gelenkachse 21 näher zum Messkopf 17 als zum Hilfspol 33 wird der Messkopf 17 auf der zu messenden Oberfläche 27 gehalten. Die Krümmung des Führungsstabes 16 kann in Abhängigkeit der Größe der Öffnung 28 in den Hohlraum 26 sowie des inneren Volumens des Hohlraumes 26 angepasst werden.

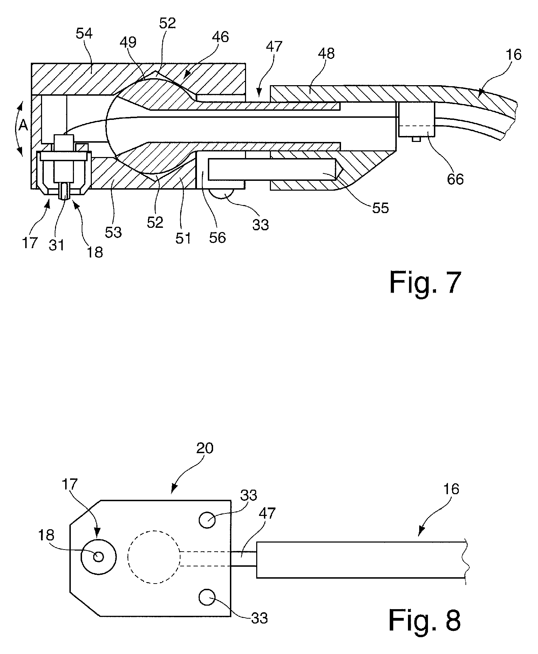

In Figur 7 ist eine schematische Schnittdarstellung einer weiteren Ausführungsform der Messsonde 11 dargestellt. Diese Ausführungsform weicht von der gemäß Figur 3 dahingehend ab, dass anstelle einer Gelenkachse 21 ein Kugelgelenk 46 vorgesehen ist, durch welches der Führungsstab 16 und das Gehäuse 20 schwenkbar zueinander verbunden sind. An dem Ende des Führungsstabes 16 ist ein erstes Gelenkteil 47 des Kugelgelenkes 46 angeordnet, welches einen Rohrabschnitt 48 aufweist, der in eine Kugel 49 mündet. Dieses erste Gelenkteil 47 ist in einem zweiten Gelenkteil 51 des Gehäuses 20 schwenkbar gelagert, wobei das Gelenkteil 51 bevorzugt eine prismatische Aufnahme 52 an einem Gehäuseunterteil 53 und eine prismatische Aufnahme 52 an einem Gehäusedeckel 54 aufweist. Dieser Gehäusedeckel 54 ist bevorzugt zum Gehäuseunterteil 53 durch eine Schraubverbindung befestigt. In dem ersten Gelenkteil 47, insbesondere in dem Rohrabschnitt 48 werden die Signalleitungen 36 vom Führungsstab 16 zum Messkopf 17 geführt. Dabei ist bevorzugt vorgesehen, dass am gehäuseseitigen Ende des Führungsstabes 16 die Signalleitungen 36 mit dem Messkopf 17 verbunden werden. Alternativ zum Kugelgelenk kann auch ein Kardangelenk oder dergleichen vorgesehen sein, um den zumindest einen Messkopf 17 schwenkbar zum Führungsstab 16 aufzunehmen.

Zwischen dem Führungsstab 16 und einem Gehäuse 20 ist eine Verdrehsicherung 55 vorgesehen, die beispielsweise als Stift ausgebildet ist. Dieser Stift ist mit dem Führungsstab 16 fest verbunden und greift gegenüberliegend in eine Aussparung 56 am Gehäuse 20 ein. Dies stellt sicher, dass eine Verdrehung des Gehäuses 20 um die Längsachse des Kugelteils 47 in einem vorgegebenen Winkelbereich beschränkt ist und dass auch eine Verschwenkung in Pfeilrichtung A begrenzt wird. Dadurch kann auch im Zusammenspiel mit der zumindest geringfügigen Eigensteifigkeit der Signalleitungen 36 nach dem Abheben der Messsonde 11 von der Messoberfläche 27 ein selbständiges Ausrichten des Gehäuses 20 in eine Grundstellung zum Führungsstab 16 ermöglicht werden.

In Figur 8 ist eine Ansicht von unten auf das Gehäuse 20 der alternativen Ausführungsform der Messsonde 11 mit einem Kugelgelenk dargestellt. Bei dieser Ausführungsform sind zwei Hilfspole 33 mit Abstand zum Messkopf 17 angeordnet, so dass die beiden Hilfspole 33 und das Sensorelement 18 eine Dreipunktauflage bilden. Dadurch kann eine definierte und verkippungsfreie Anordnung des Messkopfes 17 zur Messoberfläche 27 ermöglicht werden. Bevorzugt ist das Kugelgelenk 46 innerhalb des Dreiecks positioniert, welches durch die beiden Hilfspole 33 und das Sensorelement 18 gebildet wird. Das bei dieser Ausführungsform gemäß den Figuren 7 und 8 verwendete Kugelgelenk 46 ist bevorzugt reibungsminimiert ausgebildet. Entsprechend reibungsarme Materialien können hierfür eingesetzt werden.

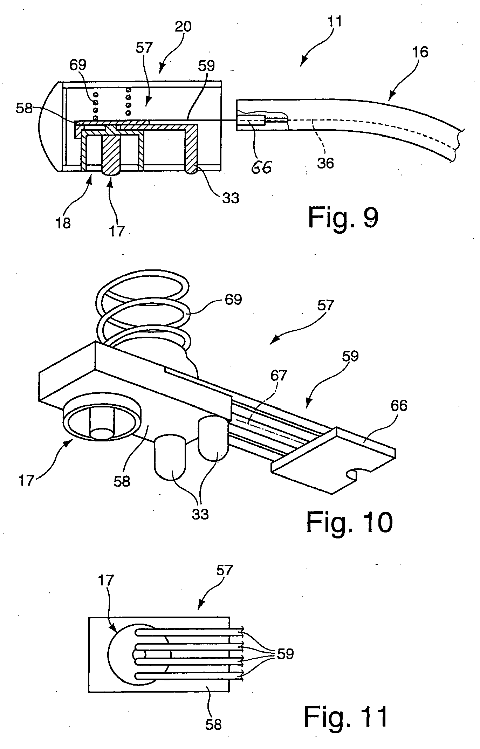

In Figur 9 ist eine schematische Schnittansicht einer weiteren alternativen Ausführungsform zu Figur 1 dargestellt. Diese Messsonde 11 besteht aus einem zwei- oder mehrteiligen Gehäuse 20, in welches eine Sondeneinheit 57 einsetzbar ist. Diese Sondeneinheit 57 umfasst eine Trägerplatte 58, an welcher Federelemente 59 angeordnet sind, die mit dem zumindest einen Messkopf 17 verbunden sind, der ebenfalls an der Trägerplatte 58 befestigt ist. Benachbart zum Messkopf 17 sind auf derselben Seite der Trägerplatte 58 beispielsweise zwei Hilfspole 33 (Figur 10) angeordnet, wobei diese und der Messkopf 17 bevorzugt eine Dreipunktauflage bilden. Diese können in Form eines gleichseitigen oder gleichschenkligen Dreiecks zueinander angeordnet sein.

Auf der gegenüberliegenden Seite der Trägerplatte 58 sind die Federelemente 59 befestigt, welche bevorzugt als streifenförmige Federelemente 59 ausgebildet sind. Bevorzugt sind dabei vier streifenförmige Federelemente 59 ausgebildet, welche im Schwerpunkt der Trägerplatte 53 oder der Sondeneinheit 57 angreifen. Die Federelemente 59 sind elektrisch leitend ausgebildet, so dass jeweils zwei Federelemente 59 mit einer Spule des Sensorelementes 18 verbunden sind. Der Messkopf 17 weist für die magnetinduktive Messung eine im Durchmesser kleinere und eine im Durchmesser größere Spule auf, und die vier streifenförmigen Federelemente 59 stehen mit diesen Spulen elektrisch in Kontakt. Bevorzugt sind die Federelemente 59 aus Kupfer-Beryllium oder dergleichen ausgebildet. Somit kann eine einfache Kontaktierung und Signalübertragung zwischen den Signalleitungen 36 am Führungsstab 16 und dem Messkopf 17 erfolgen.

Bevorzugt sind die vier streifenförmigen Federelemente 59 mit einem Anschlusselement 66 miteinander gekoppelt, so dass dieses Anschlusselement 66 in einfacher Weise an dem Ende des Führungsstabes 16 anbringbar und eine Kontaktierung mit den daran oder darin geführten Signalleitungen 36 ermöglicht ist. Diese Federelemente 59 weisen des Weiteren neben der Führungsfunktion eine Federfunktion auf. Die Sondeneinheit 57 ist über diese Federelemente 59 federnd nachgiebig zum Führungsstab 16 gelagert, so dass in und entgegen der Längsachse des Messkopfes 17 eine Auslenkbewegung ermöglicht ist. Gleichzeitig wird durch diese Anordnung der vorzugsweise in einer gemeinsamen Ebene angeordneten Federelemente 59 eine rotatorische Bewegung um die gemeinsame Längsachse 87 der Federelemente 59 ermöglicht, so dass durch diese Anordnung beziehungsweise durch die Breite der streifenförmigen Federelemente 59 und/oder deren Abstand zueinander ein Drehwinkel um die gemeinsame Längsachse 58 der einzelnen Federelemente 59 bestimmbar und ein definiertes und verkippungsfreies Aufsetzen des Messkopfes 17 zur zu prüfenden Oberfläche 27 auch dann ermöglicht ist, wenn der Führungsstab 16 nicht exakt zur Messoberfläche 27 gehalten oder geführt wird. Ergänzend kann in dem Gehäuse 20 ein Kraftspeicherelement 69, insbesondere ein Druckfederelement, vorgesehen sein. Dieses Kraftspeicherelement 69 ist bevorzugt als spiralförmiges oder kegelförmiges Federelement ausgebildet. Dieses Federelement vermeidet eine Verkippung der Trägerplatte 58 innerhalb des Gehäuses 20 und dient zusätzlich zur Ausrichtung des Messkopfes 17 und gegebenenfalls deren Hilfspole 33 zur Oberfläche 27. Des Weiteren kann in dem Gehäuse 20 bevorzugt eine nicht näher dargestellte Einstellschraube vorgesehen sein, um die Federvorspannung des Kraftspeicherelementes einzustellen.

Diese Ausführungsform gemäß den Figuren 9 bis 11 zeichnet sich insbesondere dadurch aus, dass eine Zwangsführung des Messkopfes 17 nicht gegeben ist. Sowohl die streifenförmigen Federelemente 59, die eine blattfederartige Wirkung aufweisen, als auch die gegebenenfalls zusätzlich vorgesehene Druckfeder 69 arbeiten reibungsfrei und ermöglichen ein Taumeln der Trägerplatte 58 beziehungsweise des zumindest einen daran angeordneten Messkopfes 17 zum Führungsstab 16, so dass beim Aufsetzen des Messkopfes 17 durch die Dreipunktauflage eine definierte Lage eingenommen wird. Eine solche Anordnung weist des Weiteren den Vorteil auf, dass eine erheblich massereduzierte Sondeneinheit 57 herstellbar ist.

Die Sondeneinheit 57 ist in das Gehäuse 20 einsetzbar, wobei ein Gehäuseboden eine Ausnehmung für den Messkopf und die Hilfspole 33 aufweist. Beim Einsetzen der Sondeneinheit 57 in das Gehäuse 20 sind diese geschlossen. Beispielsweise kann ein zweiteiliges Gehäuse vorgesehen sein, wie in Figur 7 beschrieben ist. Durch das Kraftspeicherelement ist die Sondeneinheit 57 verkippungsfrei innerhalb dem Gehäuse 20 gelagert.

In den Figuren 12 und 13 ist eine alternative Ausführungsform der Messsonde 11 zu den Figuren 9 bis 11 dargestellt. Bei dieser Ausführung sind an der Trägerplatte 58 benachbart zum Messkopf 17 ein davon abweichender weiterer Messkopf 60 und bevorzugt ein Hilfspol 33 angeordnet, so dass die Messköpfe 17, 60 und der Hilfspol 33 eine Dreipunktauflage bilden. Der Messkopf 17 weist ein Sensorelement 18 auf, welches zur magnetinduktiven Schichtdickenmessung vorgesehen ist. Der Messkopf 60 weist ein Sensorelement 61 auf, welches zur Messung der Schichtdicke nach dem Wirbelstromverfahren ausgebildet ist. Dies geht insbesondere aus Figur 13 hervor. Dementsprechend können die Federelemente 59 an die Anzahl der Messköpfe 17, 60 sowie die Anzahl der Anschlüsse angepasst werden. Um ein bevorzugt reibungsfreies Taumeln zu ermöglichen, können die Federelemente 59 im Abstand zueinander, in der Dicke und/oder der Breite entsprechend variiert werden. Die Messköpfe 17, 60 sind beispielsweise in dem Gehäuse 20 derart ausgerichtet, dass deren Verbindungslinie rechtwinklig zur Längsachse des Führungsstabes ausgerichtet ist. Dadurch kann beispielsweise beim Aufsetzen auf eine gekrümmte Oberfläche ein einfaches Ausrichten der Messköpfe 17, 60 zur Mantelfläche der gekrümmten Oberfläche 27 erfolgen. Die Anordnung der Messköpfe 17, 60 zueinander sowie des gegebenenfalls zusätzlichen Hilfspols 33 ist nur beispielhaft und kann auch in vertauschten Positionen vorgesehen sein. Bevorzugt ist vorgesehen, dass im Schwerpunkt zwischen den die Dreipunktauflage bildenden Messköpfen 17, 60 und Hilfspol 33 die Enden der Federelemente 59 angreifen beziehungsweise eine Krafteinleitung in die Trägerplatte über die Federelemente 59 erfolgt. Zusätzlich kann das Kraftspeicherelement 69 eine Krafteinleitung im Schwerpunkt bewirken.

In Figur 14 ist eine weitere alternative Ausführungsform zu den Sondeneinheiten 57 gemäß der Messsonde 11 in den Figuren 9 bis 11 oder der Messsonde 11 in den Figuren 12 und 13 dargestellt. Bei dieser Ausführungsform, die im Aufbau prinzipiell der Ausführungsform gemäß den Figuren 9 bis 11 beziehungsweise den Figuren 12 und 13 entspricht, sind abweichend an der Trägerplatte 58 nur der Messkopf 17 und der Messkopf 60 vorgesehen, wobei auf einen zusätzlichen Hilfspol 33 verzichtet wurde. Diese beiden Messköpfe 17, 60 sind beispielsweise quer zur Längsrichtung des Führungsstabes 16 ausgerichtet. Diese können entlang einer Mantellinie an einer gekrümmten Messoberfläche definiert aufgesetzt werden. Dabei wird durch diese in einer Linie benachbart zueinander angeordneten Messköpfe 17, 60 ebenfalls eine definierte Anlage geschaffen. Alternativ kann die in Figur 14 dargestellte Ausrichtung der Messköpfe 17, 60 auch um 90° gedreht vorgesehen sein.

## Patentansprüche

1. Messsonde zur zerstörungsfreien Messung der Dicke dünner Schichten, insbesondere in Hohlräumen, die durch eine Öffnung zugänglich sind oder auf gekrümmten Oberflächen, mit zumindest einem Messkopf (17, 60), der zumindest ein Sensorelement (18) und zumindest eine dem Sensorelement (18) zugeordnete Aufsetzkalotte (31) zum Aufsetzen des Sensorelementes (18) auf eine zu prüfende Oberfläche (27) aufweist, und mit einem Griffelement (12) zur Positionierung und Führung der Messsonde (11) auf und/oder entlang der zu prüfenden Oberfläche (27), wobei an dem Griffelement (12) ein länglicher Führungsstab (16) vorgesehen ist, der an einem dem Griffelement (12) gegenüberliegenden Ende in einem Gehäuse (20) den zumindest einen Messkopf (17, 60) aufnimmt, welcher in zumindest einem Freiheitsgrad bewegbar zum Führungsstab (16) befestigt ist, **dadurch gekennzeichnet, dass** der Führungsstab (16) federnd nachgiebig ist und a) dass benachbart zu dem zumindest einen Messkopf (17, 60) zumindest ein Hilfspol (33) vorgesehen ist oder b) dass nur die zwei Messköpfe (17 und 60) vorgesehen sind.

2. Messsonde nach Anspruch 1, **dadurch gekennzeichnet, dass** der zumindest eine Messkopf (17, 60) in dem Gehäuse (20) austauschbar angeordnet ist.

3. Messsonde nach Anspruch 2, **dadurch gekennzeichnet, dass** das Gehäuse (20) und der Führungsstab (16) durch zumindest eine Gelenkachse (21) verbunden sind, wobei bevorzugt eine Gelenkachse (21) vorgesehen ist, die senkrecht zur Längsachse des Messkopfes (17, 60) ausgerichtet ist, wobei die Längsachse des Messkopfes (17, 60) im Wesentlichen senkrecht zur zu prüfenden Oberfläche (27) ausgerichtet ist oder dass das den Messkopf (17, 60) aufnehmende Gehäuse (20) und der Führungsstab (16) durch ein Kugelgelenk (46) miteinander verbunden sind.

4. Messsonde nach Anspruch 1, **dadurch gekennzeichnet, dass** der zumindest eine Messkopf (17, 60) an einer Trägerplatte (58) angeordnet ist, welcher durch mehrere nebeneinander angeordnete streifenförmige Federelemente (59) gehalten und vorzugsweise gegenüberliegend mit einem Anschlusselement (66) am Führungsstab (16) anschließbar ist und bevorzugt die Federelemente (59) elektrisch leitend ausgebildet und insbesondere aus Kupfer-Beryllium hergestellt sind.

5. Messsonde nach Anspruch 4, **dadurch gekennzeichnet, dass** die Federelemente (59) in einer gemeinsamen Ebene nebeneinander und mit Abstand zueinander angeordnet sind und vorzugsweise im Schwerpunkt zueinander der Trägerplatte (58) oder der Sondeneinheit angreifen.

6. Messsonde nach Anspruch 4 oder 5, **dadurch gekennzeichnet, dass** die Trägerplatte (58) in ein Gehäuse (20) einsetzbar ist und die Federelemente (59) frei aus dem Gehäuse (20) herausführbar angeordnet sind und vorzugsweise zwischen der Trägerplatte (58) und dem Gehäuse (20) ein Kraftspeicherelement (69) angeordnet ist, durch welches der zumindest eine Messkopf (17, 60) gegenüber dem Gehäuse (20) eintauchbar gelagert ist.

7. Messsonde nach einem der vorhergehenden Ansprüche, **dadurch gekennzeichnet, dass** der Hilfspol (33) als Aufsetzkalotte, Laufrolle oder Gleitelement ausgebildet ist.

8. Messsonde nach einem der vorhergehenden Ansprüche, **dadurch gekennzeichnet, dass** der zumindest eine Messkopf (17) eine Schichtdicke nach einem magnetinduktiven Verfahren, nach einem Wirbelstromverfahren oder nach einem Gleichfeldverfahren ermittelt und ein weiterer Messkopf (60) eine Schichtdicke nach einem der vorgenannten Verfahren ermittelt und vorzugsweise die beiden Messköpfe (17, 60) bei der Messung von gekrümmten Oberflächen in einer Linie zur Messung entlang einer Mantellinie an der gekrümmten Oberfläche (27) des Messgegenstands zum Führungsstab (16) oder Griffelement (12) ausgerichtet sind.

9. Messsonde nach Anspruch 7, **dadurch gekennzeichnet, dass** zwei Hilfspole (33) und ein Messkopf (17, 60) oder zwei Messköpfe (17, 60), die mit zwei voneinander abweichenden Verfahren die Schichtdicke erfassen, und ein Hilfspol (33) vorgesehen sind, welche zusammen eine Dreipunktauflage bilden.

10. Messsonde nach Anspruch 7, **dadurch gekennzeichnet, dass** in einem Bereich zwischen dem zumindest einen Messkopf (17, 60) und dem zumindest einen Hilfspol (33), die Gelenkachse (21) oder das Kugelgelenk (46) zur Verbindung des Gehäuses (20) mit dem Führungsstab (16) angeordnet ist, durch welche das Gehäuse (20) schwenkbar zum Führungsstab (16) aufgenommen ist und vorzugsweise der Messkopf (17) oder das Sensorelement (18) des Messkopfes (17) entlang seiner Längsachse zumindest geringfügig bewegbar im Gehäuse (20) angeordnet ist.

11. Messsonde nach Anspruch 7, **dadurch gekennzeichnet, dass** die das Gehäuse (20) und den Führungsstab (16) verbindende Gelenkachse (21) oder das Kugelgelenk (46) im Abstand näher zum Messkopf (17) als zum Hilfspol (33) angeordnet ist.

12. Messsonde nach einem der Ansprüche 1 bis 3, **dadurch gekennzeichnet, dass** zwischen dem Führungsstab (16) und dem Gehäuse (20) eine Verdrehsicherung (55, 56) oder ein Kraftspeicherelement vorgesehen ist, welches den Messkopf (17) in einer zum Führungsstab (16) geneigten Ausgangslage positioniert.

13. Messsonde nach einem der vorhergehenden Ansprüche, **dadurch gekennzeichnet, dass** der Führungsstab (16) einen länglichen Grundkörper (38) mit einem gekrümmten Verlauf oder einen im Wesentlichen geradlinigen Verlauf aufweist und vorzugsweise der Grundkörper (38) bezüglich seiner Querschnittsachsen steif ausgebildet ist und bezüglich seiner Längsachse in Krümmungsrichtung nachgiebig ist und insbesondere über seine gesamte Länge gekrümmt ausgebildet ist und vorzugsweise einen konstanten Krümmungsverlauf aufweist.

14. Messsonde nach Anspruch 1, **dadurch gekennzeichnet, dass** der Führungsstab (16) an einer Innenseite des gekrümmten Grundkörpers (38) zumindest eine Gleit- oder Anlagefläche (41) aufweist.

15. Messsonde nach Anspruch 1, **dadurch gekennzeichnet, dass** der Führungsstab (16) eine in Längsrichtung sich erstreckende U-förmige Vertiefung (39) aufweist, welche sich entlang einer Innenseite des gekrümmten Grundkörpers (38) erstreckt, in welche zum Messkopf (17) führende Signalleitungen (36) geführt sind, insbesondere eingesetzt, eingeklebt oder eingepresst sind.

16. Messsonde nach Anspruch 1, **dadurch gekennzeichnet, dass** der Führungsstab (16) mehrteilig ausgebildet ist und vorzugsweise jeweils zwei benachbarte Stababschnitte des Führungsstabes (16) durch ein Kupplungselement miteinander verbindbar sind und insbesondere das Kupplungselement eine flexible Knickstelle aufweist, welche vorzugsweise nach einer zwangsweisen Auslenkung in seine Ausgangslage zurückkehrt.

17. Messsonde nach Anspruch 16, **dadurch gekennzeichnet, dass** das Kupplungselement zum Anschluss der Signalleitung (36) einen Steckkontakt für eine Durchkontaktierung aufweist.

18. Messsonde nach Anspruch 1, **dadurch gekennzeichnet, dass** der Führungsstab (16) aus metallischem Material, insbesondere aus Federstahl, ausgebildet und vorzugsweise durch eine spanende Bearbeitung oder durch einen Biege- und Stanzvorgang herstellbar ist oder dass der Führungsstab (16) aus einem thermoplastischen Elastomer ausgebildet ist, welcher vorzugsweise durch eine spanende Bearbeitung oder durch einen Biege-Press-Vorgang herstellbar ist, oder dass der Führungsstab aus einer Kunststoffverbundmatrix, insbesondere einem faserverstärkten oder glasfaser- oder kohlefaserverstärktem Kunststoff, hergestellt ist, in welchem die Signalleitungen (36) zumindest teilweise angeformt oder eingebettet sind.

## Claims

1. Measuring probe for non-destructive measuring of the thickness of thin layers, in particular in cavities, which are accessible by an opening or on curved surfaces, with a measuring head (17), which comprises at least one sensor element (18) and at least one contact spherical cap (31), assigned to the sensor element (18) on a surface (27), to be checked, and with a gripping element (12) for positioning and guiding the measuring probe (11) on and/or along the surface (27) to be measured, wherein on the gripping element (12), a long, guide bar (16) is provided, which accepts the at least one measuring head (17, 60) on its end opposing the gripping element (12), in such a way that it is moveable with at least one degree of freedom in relation to the guide bar (16) **characterised in that** the guide bar (16) is elastically yielding and that at least one auxiliary pole (33) is provided adjacent to the at least one measuring head (17) or that only the two measuring fields (17 and 60) are provided.

2. Measuring probe according to claim 1, **characterised in that** the at least one measuring head (17, 60) is removably arranged in a housing (20).

3. Measuring probe according to claim 2, **characterised in that** the housing (20) and the guide bar (16) are connected by at least one hinge axis (21), preferably one hinge axis (21) being provided which is oriented perpendicular to the longitudinal axis of the measuring head (17, 60), the longitudinal axis of the measuring head (17, 60) being oriented substantially perpendicular to the surface (27) to be checked or that the housing (20), which receives the measuring head (17, 60), and the guide bar (16) are interconnected by a ball-and-socket joint (46).

4. Measuring probe according to claim 1, **characterised in that** the at least one measuring head (17, 60) is arranged on a carrier plate (58) which is retained by a plurality of strip-shaped spring elements (59) arranged side by side and is preferably opposingly connectable to the guide bar (16) via a connection element (66) and preferably the spring elements (59) are electrically conductive and, in particular, are produced from beryllium copper.

5. Measuring probe according to claim 4, **characterised in that** the spring elements (59) are arranged side by side in a common plane and at a distance from one another and are preferably applied relative to one another in the centre of gravity of the carrier plate (58) or the probe unit.

6. Measuring probe according to claim 4 and 5, **characterised in that** the carrier plate (58) is placed in a housing (20) and the spring elements (59) are arranged so as to be freely removable from the housing (20) and preferably an energy storage element (69) is arranged between the carrier plate (58) and the housing (20), as a result of which energy storage element the at least one measuring head (17, 60) is mounted immersably relative to the housing (20).

7. Measuring probe according to any one of the previous claims, **characterised in that** the auxiliary pole (33) is formed as a contact spherical cap, roller or sliding element.

8. Measuring probe according to any one of the previous claims, **characterised in that** the at least one measuring head (17) detects a layer thickness by a magentic induction method, by an eddy current method or by a d.c. field method, and a further measuring head (60) detects a layer thickness by any one of the aforementioned methods and preferably when measuring curved surfaces the two measuring heads (17, 60) are oriented relative to the guide bar (16) or gripping element (12) in a line relative to the measurement along a surface line on the curved surface (27) of the object to be measured.

9. Measuring probe according to claim 7, **characterised in that** two auxiliary poles (33) and a measuring head (17, 60) or two measuring heads (17, 60) which measure the layer thickness by two different methods and one auxiliary pole (33) are provided which together form a three-point bearing.

10. Measuring probe according to claim 7, **characterised in that** in a region between the at least one measuring head (17, 60) and the at least one auxiliary pole (33), the hinge axis (21) or the ball-and-socket joint (46) is arranged for connecting the housing (20) to the guide bar (16), as a result of which the housing (20) is held relative to the guide bar (16) in a pivotable manner and preferably the measuring head (17) or the sensor element (18) of the measuring head (17) is arranged so that it is at least slightly moveable in the housing (20) along its longitudinal axis.

11. Measuring probe according to claim 7, **characterised in that** the hinge axis (21) connecting the housing (20) and the guide bar (16) or the ball-and-socket joint (46) is positioned nearer to the measuring head (17) than to the auxiliary pole (33).

12. Measuring probe according to any one of claims 1 to 3, **characterised in that** an antitwist protection (55, 56) or an energy storage element is provided between the guide bar (16) and the measuring head (17), which positions the measuring head (17) in a position which is inclined to the guide bar (16).

13. Measuring probe according to any one of the previous claims, **characterised in that** the guide bar (16) comprises an elongated base body (38) with a curved course or a substantially straight course, and the base body (38) is preferably rigidly formed, with regard to its cross section, and is resilient with regard to its longitudinal axis in the direction of curvature and in particular has a curved design over its whole length, and preferably comprises a constant curvature course.

14. Measuring probe according to claim 1, **characterised in that** the guide bar (16) comprises at least one sliding surface or contact surface (41) on one internal side of the curved base body (38).

15. Measuring probe according to claim 1, **characterised in that** the guide bar (16) has a U-shaped recess (39) extending in the longitudinal direction, which extends along an internal side of the curved base body (38), into which signalling lines, leading to the measuring head (17), are guided, in particular, inserted, glued or pressed.

16. Measuring probe according to claim 1, **characterised in that** the guide bar (16) is formed in a number of parts and each two adjacent bar portions of the guide bar (16) are preferably interconnected by a coupling element and in particular the coupling element comprises a flexible kink which preferably returns into its starting position by a forced deflection.

17. Measuring probe according to claim 16, **characterised in that** the coupling element comprises a plug-in contact for a through conenction in order to connect the signal line (36).

18. Measuring probe according to claim 1, **characterised in that** the guide bar (16) is formed from metallic material, particularly spring steel, and is preferably produced by machining or by a forming process or that the guide bar (16) is formed from a thermoplastic elastomer, which is preferably produced by machining or a bending-press process or that the guide bar (16) is produced from a plastic composite matrix, particularly a fibre-reinforced or glass-fibre reinforced or carbon-fibre reinforced plastic, in which the signal lines (36) are at least partly moulded or embedded.

## Revendications

1. Sonde de mesure destinée à la mesure non-destructive de l'épaisseur de couches minces, en particulier dans des cavités accessibles par une ouverture ou sur des surfaces incurvées, pourvue d'au moins une tête de mesure (17, 60) qui présente au moins un élément capteur (18) et au moins une calotte de positionnement (31) affectée audit au moins un élément capteur (18) et destinée à positionner l'élément capteur (18) sur une surface à examiner (27), et d'un élément-poignée (12) destiné à positionner et à guider la sonde de mesure (11) sur et/ou le long de la surface à examiner (27), sur l'élément-poignée (12) étant prévue une tige de guidage allongée (16) qui reçoit dans un boîtier (20), sur une extrémité opposée à l'élément-poignée (12), ladite au moins une tête de mesure (17, 60) qui est fixée de manière à pouvoir bouger par rapport à la tige de guidage (16) selon au moins un degré de liberté, **caractérisée en ce que** la tige de guidage (16) est résiliente et a) **en ce qu'**au moins un pôle auxiliaire (33) est prévu de manière contiguë à ladite au moins une tête de mesure (17, 60), ou b) en ce que sont prévues uniquement les deux têtes de mesure (17 et 60).

2. Sonde de mesure selon la revendication 1, **caractérisée en ce que** ladite au moins une tête de mesure (17, 60) est disposée dans le boîtier (20) de manière à pouvoir être échangée.

3. Sonde de mesure selon la revendication 2, **caractérisée en ce que** le boîtier (20) et la tige de guidage (16) sont reliés par au moins un axe d'articulation (21), l'axe d'articulation prévu étant de préférence un axe d'articulation (21) orienté de manière perpendiculaire à l'axe longitudinal de la tête de mesure (17, 60), l'axe longitudinal de la tête de mesure (17, 60) étant orienté essentiellement de manière perpendiculaire à la surface à examiner (27), ou **en ce que** le boîtier (20) qui reçoit la tête de mesure (17, 60) et la tige de guidage (16) sont reliés l'un à l'autre par une articulation sphérique (46).

4. Sonde de mesure selon la revendication 1, **caractérisée en ce que** ladite au moins une tête de mesure (17, 60) est disposée sur une plaque support (58) et est maintenue par plusieurs éléments élastiques (59) en forme de bande disposés côte à côte et peut être raccordée, de préférence du côté opposé à la tige de guidage (16), à l'aide d'un élément de raccordement (66), et **en ce que** de préférence les éléments élastiques (59) sont réalisés de manière à être électroconducteurs et sont en particulier fabriqués en cuprobéryllium.

5. Sonde de mesure selon la revendication 4, **caractérisée en ce que** les éléments élastiques (59) sont disposés côte à côte dans un plan commun et à une distance donnée les uns des autres et appuient de préférence au niveau du centre de gravité de la plaque support (58) ou de l'unité-sonde.

6. Sonde de mesure selon la revendication 4 ou 5, **caractérisée en ce que** la plaque support (58) peut être mise en place dans un boîtier (20) et **en ce que** les éléments élastiques (59) sont disposés de manière à pouvoir sortir librement du boîtier (20) et **en ce que** de préférence entre la plaque support (58) et le boîtier (20) est disposé un élément accumulateur d'énergie (69) grâce auquel ladite au moins une tête de mesure (17, 60) est logée de manière à pouvoir rentrer par rapport au boîtier (20).

7. Sonde de mesure selon l'une quelconque des revendications précédentes, **caractérisée en ce que** le pôle auxiliaire (33) est réalisé sous forme de calotte de positionnement, de galet de roulement ou d'élément de glissement.

8. Sonde de mesure selon l'une quelconque des revendications précédentes, **caractérisée en ce que** ladite au moins une tête de mesure (17) détermine une épaisseur de couche selon un procédé magnéto-inductif, selon un procédé par courants de Foucault ou selon un procédé par champ magnétique continu, et **en ce qu'**une autre tête de mesure (60) détermine une épaisseur de couche selon l'un des procédés précédemment cités, et **en ce que** de préférence les deux têtes de mesure (17, 60) sont, lors de la mesure de surfaces incurvées, orientées sur une même ligne par rapport à la tige de guidage (16) ou à l'élément-poignée (12) en vue d'effectuer ladite mesure le long d'une génératrice au niveau de la surface de mesure incurvée (27) de l'objet de mesure.

9. Sonde de mesure selon la revendication 7, **caractérisée en ce qu'**il est prévu deux pôles auxiliaires (33) et une tête de mesure (17, 60) ou deux têtes de mesure (17, 60) saisissant l'épaisseur de couche grâce à deux procédés différant l'un de l'autre ainsi qu'un pôle auxiliaire (33), lesquels forment ensemble un support sur trois points.

10. Sonde de mesure selon la revendication 7, **caractérisée en ce que** l'axe d'articulation (21) ou l'articulation sphérique (46) est disposé(e) dans une zone située entre ladite au moins une tête de mesure (17, 60) et ledit au moins un pôle auxiliaire (33) en vue de relier le boîtier (20) à la tige de guidage (16) et grâce auquel ou à laquelle ledit boîtier (20) est logé de manière à pouvoir pivoter par rapport à la tige de guidage (16), et **en ce que** de préférence la tête de mesure (17) ou l'élément capteur (18) de la tête de mesure (17) est disposé (e) dans le boîtier (20) de manière à pouvoir bouger au moins légèrement le long de son axe longitudinal.

11. Sonde de mesure selon la revendication 7, **caractérisée en ce que** l'axe d'articulation (21) ou l'articulation sphérique (46) qui relie le boîtier (20) et la tige de guidage (16) est disposé (e) à une distance plus proche de la tête de mesure (17) que du pôle auxiliaire (33).

12. Sonde de mesure selon l'une quelconque des revendications 1 à 3, **caractérisée en ce qu'**entre la tige de guidage (16) et le boîtier (20) est prévu un dispositif anti-torsion (55, 56) ou un élément accumulateur d'énergie qui positionne la tête de mesure (17) dans une position initiale inclinée par rapport à la tige de guidage (16).

13. Sonde de mesure selon l'une quelconque des revendications précédentes, **caractérisée en ce que** la tige de guidage (16) présente un corps de base allongé (38) avec un tracé incurvé ou un tracé essentiellement rectiligne et **en ce que** de préférence le corps de base (38) est formé de manière rigide quant à ses axes de section transversale et est résilient, quant à son axe longitudinal, dans le sens de l'incurvation et est réalisé de manière incurvée en particulier sur toute sa longueur et présente de préférence un tracé d'incurvation constante.

14. Sonde de mesure selon la revendication 1, **caractérisée en ce que** la tige de guidage (16) présente sur une face intérieure du corps de base incurvé (38) au moins une surface de glissement ou d'appui (41).

15. Sonde de mesure selon la revendication 1, **caractérisée en ce que** la tige de guidage (16) présente un creux (39) en forme de U qui s'étend en sens longitudinal, le long d'une face intérieure du corps de base incurvé (38) et dans lequel sont conduites, en particulier sont insérées, par collage ou par pression, des lignes de transmission de signaux (36) qui mènent jusqu'à la tête de mesure (17).

16. Sonde de mesure selon la revendication 1, **caractérisée en ce que** la tige de guidage (16) est réalisée en plusieurs parties et **en ce que** de préférence deux segments de tige voisins de la tige de guidage (16) peuvent être respectivement reliés l'un à l'autre par un élément de couplage et **en ce qu'**en particulier l'élément de couplage présente un pli flexible qui, de préférence, revient à sa position de départ après une déviation forcée.

17. Sonde de mesure selon la revendication 16, **caractérisée en ce que** l'élément de couplage présente, en vue de connecter la ligne de transmission de signaux (36), un contact à fiches permettant de réaliser une connexion entière.

18. Sonde de mesure selon la revendication 1, **caractérisée en ce que** la tige de guidage (16) est réalisée en matériau métallique, en particulier en acier à ressort, et peut être fabriquée de préférence grâce à un usinage par enlèvement de copeaux ou par une opération de pliage et de découpage, ou **en ce que** la tige de guidage (16) est réalisée en un élastomère thermoplastique et peut être fabriquée de préférence grâce à un usinage par enlèvement de copeaux ou par une opération de pliage et pressage, ou **en ce que** la tige de guidage est fabriquée en une matrice de plastique composite, en particulier en une matière plastique renforcée de fibres ou renforcée de fibres de verre ou de fibres de carbone dans laquelle les lignes de transmission de signaux (36) sont au moins partiellement moulées ou noyées.
